# EUROPEAN PATENT APPLICATION

(11) **EP 1 976 280 A2**
(43) Date of publication of application: **01.10.2008**
(21) Application number: 07122153.5
(22) Date of filing: 03.12.2007
(51) Int. Cl.: H04N 5/445

(54) **Method and Electronic Apparatus for Processing Signal of Remote Controller, and Method and Remote Controller for Controlling Electronic Apparatus**

(30) Priority: 26.03.2007 KR 20070029368
(71) Applicant: Samsung Electronics Co., Ltd., Suwon-si, Gyeonggi-do 442-742 (KR)
(72) Inventor: Jeon, Sung-min, Yeongtong-dong Yeongton-gu, Suwon-si Gyeonggi-do (KR)
(74) Representative: Robinson, Ian Michael

(57) **Abstract**

Provided are a method and apparatus for controlling an electronic apparatus, including a user input unit (230) which includes a plurality of user input keys (40) to receive user input signals; a control unit (110) which determines which user input keys (41) can be operated from among the plurality of user input keys (40) based on arrangement information of at least one piece of selection information displayed on a screen (103) and selected in response to a user input signal and provides information about the determined user input keys (41); and a transmitting unit (210) which transmits identification information identifying the user input key (41), wherein when one of the determined user input keys (41) is selected, the control unit (110) controls the transmitting unit (210) to transmit the identification information to the electronic apparatus so that selection information corresponding to a position of the selected user input key (41) can be selected from the pieces of selection information displayed on the screen (103).

## Description

### BACKGROUND OF THE INVENTION

### 1. Field of the Invention

Apparatus and methods consistent with the present invention relate to controlling an electronic apparatus, and more particularly, to processing signals of a remote controller.

### 2. Description of the Related Art

Electronic apparatuses have not only their primary functions, according to their purposes, but also various additional functions. For example, recently developed televisions provide both analog and digital broadcast services, and in the case of an Internet protocol television (IPTV), services, such as Internet searching, home shopping, and home banking, can be provided through data communication over the Internet. Typically, users operate electronic apparatuses using a remote controller. As the functions of electronic apparatuses are varied and complicated, a remote controller has to include buttons for the various functions, and thus the number of buttons increases accordingly, the size of the remote controller increases, and operations tend to be complicated.

### SUMMARY OF THE INVENTION

Exemplary embodiments of the present invention overcome the above disadvantages and other disadvantages not described above. In addition, the present invention is not required to overcome the disadvantages described above, and an exemplary embodiment of the present invention may not overcome any of the problems described above.

According to the present invention there is provided an apparatus and method as set forth in the appended claims. Other features of the invention will be apparent from the dependent claims, and the description which follows.

The present invention provides an electronic apparatus and a method of processing signals of a remote controller which allows a user to efficiently operate the electronic apparatus using the remote controller.

The present invention also provides a method of controlling an electronic apparatus straightforwardly and efficiently and a remote controller.

According to an aspect of the present invention, there is provided a method of processing a remote controller signal, the method comprising: providing a screen including at least one piece of selection information which can be selected in response to a user input signal; mapping identification information of individual user input keys of a remote controller respectively with the at least one piece of selection information at a positions corresponding to the user input keys; and selecting the selection information which is mapped with the identification information and is placed at a position corresponding to a user input key when the identification information for identifying the user input key at a predetermined position of the remote controller is received.

The mapping may be performed each time the selection information changes due to the changes in the screen.

The at least one piece of selection information may include information for screen setting, sound setting, or broadcast channel selection.

The method may further comprise changing a broadcast channel according to the selection information if the selection information is broadcast channel information.

According to another aspect of the present invention, there is provided an electronic apparatus comprising: a control unit which configures a screen which includes at least one piece of selection information that can be chosen in response to a user input signal and maps identification information of individual user input keys of a remote controller with the at least one piece of selection information at a position corresponding to the user input key; an identification information receiving unit which receives the identification information for identifying the user input key from the remote controller; and a display unit which outputs the screen; wherein when receiving the identification information for identifying a certain user input key, the control unit selects the at least one piece of selection information which is mapped with the identification information and placed at the position corresponding to the user input key.

According to yet another aspect of the present invention, there is provided a method of controlling an electronic apparatus using a remote controller, the method comprising: setting arrangement information of at least one piece of selection information which can be selected in response to a user input signal and is displayed on a screen of the electronic apparatus; determining which user input keys will be used from among a plurality of user input keys based on the set arrangement information of the selection information; providing information about the determined user input keys; and selecting selection information which corresponds to a position of a user input key which is selected from among the determined user input keys so as to be operated.

In the determining of which user input keys will be used, the user input keys which are placed at positions corresponding to the positions of pieces of selection information on the screen may be determined as the user input keys that will be used.

In the providing of the information about the determined user input keys, the determined user input keys may be illuminated.

In the providing of the information about the determined user input keys, numbers may be respectively applied to the determined user input keys.

According to still another aspect of the present invention, there is provided a remote controller comprising: a user input unit which includes a plurality of user input keys to receive user input signals; a control unit which determines which user input keys will be operated from among the plurality of user input keys based on arrangement information of at least one piece of selection information which is displayed on a screen of an electronic apparatus and can be selected in response to a user input signal and provides information about the determined user input keys; and a transmitting unit which transmits identification information for identifying the user input keys, wherein when one of determined user input keys is selected, the control unit controls the transmitting unit to transmit identification information for identifying the selected user input key to the electronic apparatus so that selection information which corresponds to a position of the selected user input key can be selected from among the pieces of selection information displayed on the screen of the electronic apparatus.

### BRIEF DESCRIPTION OF THE DRAWINGS

The above and other features of the present invention will become more apparent by describing in detail exemplary embodiments thereof with reference to the attached drawings in which:
FIG. 1 illustrates an electronic apparatus and a remote controller that controls the electronic apparatus according to an exemplary embodiment of the present invention;
FIG. 2 shows how user input keys that operate effectively are set from among the user input keys on the remote controller in FIG. 1 according to an exemplary embodiment of the present invention;
FIG. 3 shows how user input keys that operate effectively are set from among user input keys on a remote controller according to another exemplary embodiment of the present invention;
FIG. 4 is a block diagram of an electronic apparatus and a remote controller for controlling the electronic apparatus according to an exemplary embodiment of the present invention;
FIG. 5 is a flowchart of a method of processing a signal of the remote controller according to an exemplary embodiment of the present invention;
FIG. 6 is a flowchart of a method of controlling an electronic apparatus using a remote controller according to an exemplary embodiment of the present invention; and
FIGS. 7A and 7B are drawings explaining the control operation of an electronic apparatus according to an exemplary embodiment of the present invention.

### DETAILED DESCRIPTION OF THE INVENTION

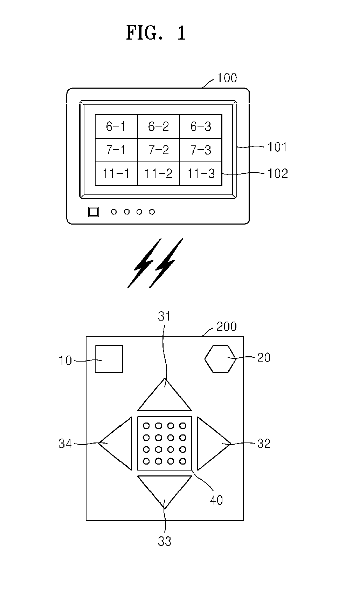

FIG. 1 illustrates an electronic apparatus 100 and a remote controller 200, or remote control 200, that controls the electronic apparatus 100 according to an exemplary embodiment of the present invention.

Although in the present exemplary embodiment the electronic apparatus is a broadcast receiving apparatus that provides broadcast channel information, any form of electronic apparatus can be used as long as the electronic apparatus provides information by displaying it and is controlled by a remote controller. A screen 101 of the electronic apparatus 100 is formed in a grid pattern consisting of three columns and three rows. Although in FIG. 1 the broadcast channel information provided by the electronic apparatus 100 includes only broadcast channel numbers, the information may also further include various information such as broadcast station names and information of a program at each broadcasting time.

Referring to FIG. 1, the remote controller 200 includes a plurality of user input keys. The user input keys may be formed as buttons or in the form of a touch screen, which can receive a user's input.

The remote controller 200 includes a setting key 10, a power key 20, direction keys 31, 32, 33, and 34, and a user input key 40 through which a user selects selection information. The user input key 40 may have numbers on it to allow the user to select the selection information.

The setting key 10 is for selecting a mode to set arrangement information of selection information, which is screen configuration information including at least one piece of selection information that is selected in response to a user input signal. The power key 20 is used to power on the electronic apparatus 100 in response to the user's input. The direction keys 31 to 34 are user input keys to move a cursor or a page on a screen.

According to an exemplary embodiment of the present invention, the user can input the arrangement information of the selection information by selecting the number key of the user input key 40 for selecting the selection information after pressing the setting key 10 of the remote controller 200. For example, when the user selects two numbers, x and y, on the user input key 40 after pressing the setting key 10, the arrangement information of the selection information on the row x and the column y is set in the remote controller 200. Then, the remote controller 200 determines a key, which can be operated when the user selects selection information on the screen, from among the plurality of keys on the user input key 40.

The remote controller 200 provides the user with information about the user input key, which can be operated, in order to inform the user of which user input key is placed on the position corresponding to an arrangement of the selection information. When the user selects the user input key which can be operated, the electronic apparatus 100 identifies and performs the selection information at a position corresponding to the selected user input key.

According to the present exemplary embodiment, the input number of user input keys that are to be pressed is reduced, compared with the related art case where a user has to press direction keys to move a cursor in order to select the selection information from a screen on which it is displayed. Furthermore, if the electronic apparatus 100 can control other electronic apparatuses which are connected to the electronic apparatus 100 over a network, the other electronic apparatuses can be controlled using the remote controller 200.

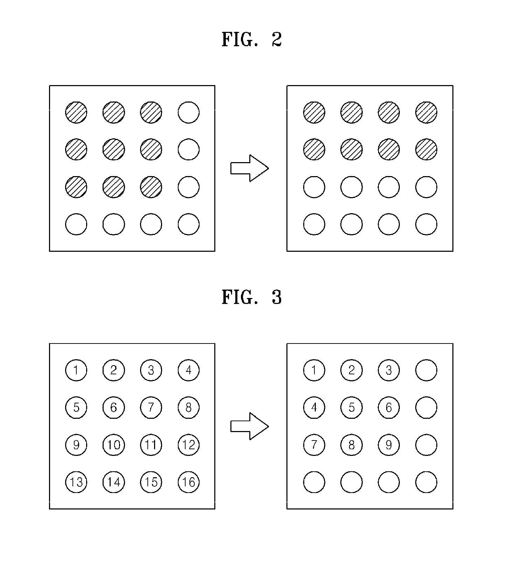

FIG. 2 shows how user input keys that can be operated are set from among the user input keys on the remote controller 200 in FIG. 1 according to an exemplary embodiment of the present invention.

It is assumed that nine shaded user input keys are initially set to be operated when the remote controller 200 includes sixteen user input keys 40 as shown in FIG. 1. The remote controller 200 enables the user to easily recognize the nine user input keys using a module that selectively illuminates the selection keys. When one of the shaded user input keys is selected, selection information at a position corresponding to the selected user input key can be identifies from among pieces of selection information that are arranged in the same way as the user input keys as shown in the screen 101 of FIG. 1.

When the electronic apparatus 100 arranges more than one piece of selection information in the form of four columns and two rows, the user input the arrangement information of the selection information using the setting key 10. Then, the remote controller 200 determines that the keys on the four columns and the two rows of the user input keys 40 will be operated, as shown in FIG. 2. When one of the user input keys to be operated is selected, the selection information which is placed at a position corresponding to the selected key is identified from the pieces of selection information arranged in the form of four columns and two rows.

FIG. 3 shows how user input keys that will be operated are set from among user input keys 40 on a remote controller 200 according to another exemplary embodiment of the present invention.

Referring to FIG. 3, in the remote controller 200, a plurality of user input keys 40 for selecting selection information may have numbers on them, respectively. If all sixteen user input keys 40 are set to operate effectively, numbers can be put on the whole sixteen user input keys 40 as shown in the left drawing of FIG. 3. When pieces of selection information are arranged in the form of three rows and three columns and displayed in a screen of the electronic apparatus 100 and this arrangement information of the selection information is input to the remote controller 200, the numbers on the user input keys can be changed as shown in the right drawing of FIG. 3. As such, numbers may be applied to the user input keys, which will be used for selecting the selection information, providing the user with information about the user input keys.

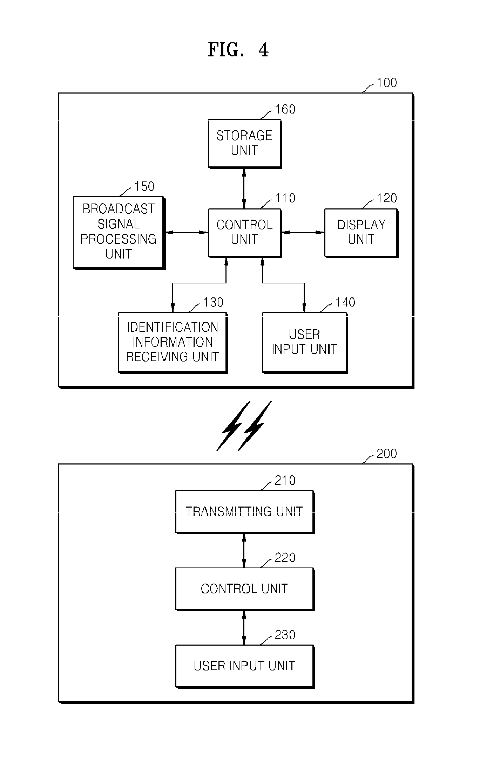

FIG. 4 is a block diagram of an electronic apparatus 100 and a remote controller 200 for controlling the electronic apparatus 100 according to an exemplary embodiment of the present invention.

Referring to FIG. 4, the electronic apparatus 100 includes a control unit 110, a display unit 120, an identification information receiving unit 130, a user input unit 140, a broadcast receiving and processing unit 150, and a storage unit 160.

The control unit 110 maps pieces of identification information with pieces of the selection information of which positions correspond to the positions of the user input keys, respectively, the user input keys displayed in the screen of the electronic apparatus 100. The pieces of identification information are for identifying the selection information of the remote controller 200 and correspond to positions of the user input keys. The control unit 110 manages mapping information generated by mapping the identification information to the selection information. In order to operate the electronic apparatus 100 according to the selection information which is selected to correspond to the identification information, control information may be mapped with the identification information and the selection information according to the selection information of the electronic apparatus 100. The selection information may include information about the screen setting, the sound setting, or the channel selection.

The display unit 120 outputs the selection information providing screen to a display, which has been generated by the control unit 110. The display unit 120 outputs a variety of data provided by the electronic apparatus 100, the data including a result of processing performed by the broadcast signal processing unit 150.

The identification information receiving unit 130 receives the identification information transmitted by using the signals from the remote controller 200. When the identification information corresponding to a certain user input key is received from the remote controller 200, the control unit 110 performs the operation according to the identification information. The control unit 110 identifies the selection information mapped with the identification information according to the identification information of the user input key at a certain position.

The control unit 110 maps the identification information of each user input key with the selection information which has a position corresponding to the position of the user input key, which is provided to the screen, each time the selection information changes due to the changes in the screen. Thus, even though the screen is changed, if the user selects one of the user input keys to be operated, the operation can be performed according to the selection information corresponding to the selected user input key.

The electronic apparatus 100 may act as a broadcast receiving apparatus by further including the broadcast signal processing unit 150. The broadcast signal processing unit 150 receives and processes broadcast signals such as ground waves or broadcast signals through the satellites or cables. When the selection information provided to the display unit of the electronic apparatus 100 is broadcast channel information for selecting a channel, the control unit 110 controls a tuner (not shown) included in the broadcast signal processing unit 150 to change a channel to the selected channel.

The storage unit 160 may store information about controlling operations of the electronic apparatus 100, corresponding to the information for identifying each user input key provided by the remote controller 200. The control unit 110 controls the operation of the electronic apparatus 100 with reference to the operation control information stored in the storage unit 160. For example, when a user input signal corresponding to the power key 10 is received, the power may be provided to the electronic apparatus 100 by interpreting the corresponding identification information.

According to the exemplary embodiment of the present invention, the remote controller 200 includes a transmitting unit 210, a control unit 220, and a user input unit 230.

The control unit 220 determines which user input keys will be operated from among a plurality of user input keys based on arrangement information of the selection information when the screen including at least one piece of selection information in response to the user input signal is provided in the electronic apparatus 100. Then, the control unit 220 provides information about the user input keys to be operated.

The user input unit 230 includes a plurality of user input keys for receiving the user input.

The control unit 220 sets the user input keys which are placed at positions corresponding to the positions of the selection information displayed on the screen as the user input keys which will be operated.

The control unit 220 may control the user input unit 230 to illuminate the user input keys, which will be operated, for easier identification by the user. Alternatively, the control unit 220 applies numbers to each of the user input keys, which will be operated, and controls the user input unit 230 to display the numbers.

The transmitting unit 210 transmits the identification information for the user input keys to the electronic apparatus 100. When one of the user input keys is selected, the control unit 220 controls the transmitting unit 210 to transmit the identification information of a selected user input key to the electronic apparatus 100 so that the selection information, the position of which corresponds to the position of the selected user input key, is identified from among the pieces of selection information displayed on the screen of the electronic apparatus 100. The selection information may be information for the screen setting, the sound setting, or the broadcast channel selection.

The control unit 220 can determine the identification information that corresponds to the user key input based on the duration of key input time, and control the transmitting unit 210 to transmit the identification information to the electronic apparatus 100. For example, broadcast channel numbers of 1 to 9, 11 to 19, 21 to 29, through to 91 to 99 may be chosen by pressing number keys. The broadcast channel numbers which include one zero "0" in it such as 10, 20, 30 through to 90, 110, may be chosen by pressing a key of the number right before "0" for a certain duration of time, that is, a first duration of time. In the case of the number 100, the identification information corresponding to the channel number 100 may be set by pressing "0" for a certain duration of time which is different from the first duration of time.

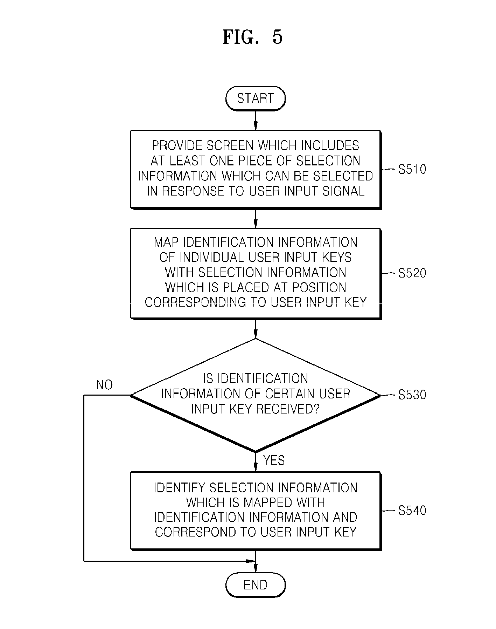

FIG. 5 is a flowchart of a method of processing a signal of the remote controller according to an exemplary embodiment of the present invention.

In operation S510, the electronic apparatus 100 provides a screen which includes at least one piece of selection information which can be chosen in response to a user input signal. The selection information may include information for the screen setting, the sound setting, or the channel selection.

In operation S520, the electronic apparatus 100 maps identification information of each user input key with selection information which is placed at a position corresponding to the user input key. The operation S520 is performed each time the selection information changes due to changes in the screen.

When the identification information of the user input key on a certain position is received in operation S530, the electronic apparatus 100 identifies the selection information which has been mapped with the identification information and is placed at a position corresponding to the user input key in operation S540. For example, if the selection information provided by the electronic apparatus 100 is broadcast channel information for channel selection, the electronic apparatus 100 may change the channel to the broadcast channel displayed on the selected position.

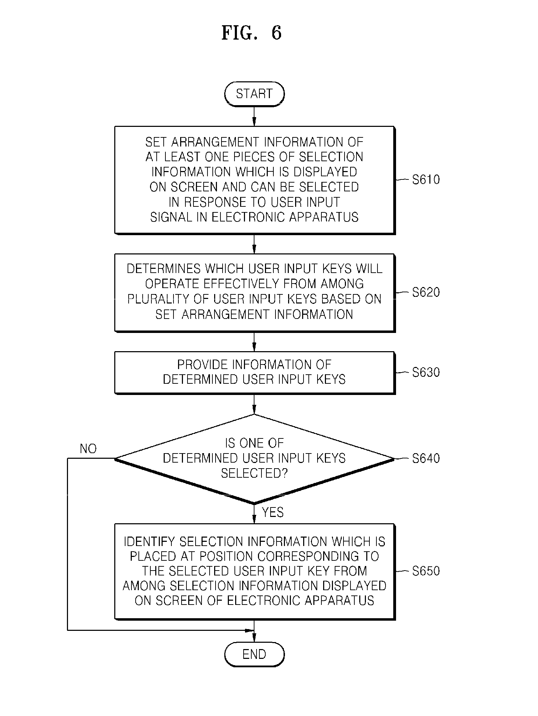

FIG. 6 is a flowchart of a method of controlling an electronic apparatus 100 using a remote controller 200 according to an exemplary embodiment of the present invention.

In operation S610, a user sets arrangement information of at least one piece of selection information, which is displayed on a screen of the electronic apparatus 100, to the remote controller 200. The selection information can be selected in response to a user input signal.

In operation S620, the remote controller 200 determines which user input keys will be operated from among a plurality of input keys based on the arrangement information of the set selection information. In this operation, the remote controller 200 determines the user input keys placed at positions corresponding to the positions of the selection information arranged on the screen as the user input keys which will be operated.

In operation S630, information about the user input key to be operated is provided. By illuminating the user input keys which will be operated, the information may be provided. Also, the numbers are applied to the user input keys, thereby providing the information about which user input keys will be operated.

When one of the user input keys which will be operated is selected in operation S640, the selection information at a position corresponding to the selected user input key is selected from among the pieces of selection information displayed on the screen in operation S650.

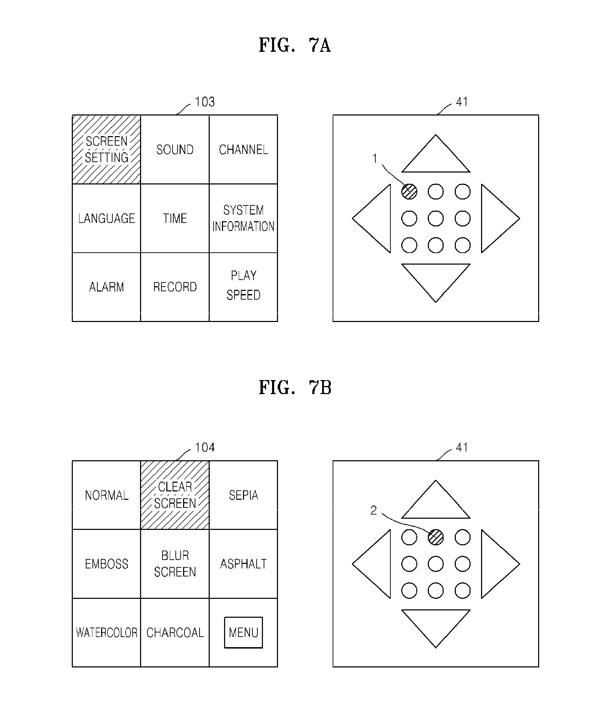

FIGS. 7A and 7B are drawings for explaining the control operation of an electronic apparatus according to an exemplary embodiment of the present invention.

In FIG. 7A, the left drawing is the menu providing screen 103 of the display unit 120 in the electronic apparatus 100. The right drawing shows a plurality of user input keys 41 that are part of the remote controller 200. When a user presses a key button 1, a screen setting is selected which is placed at a position corresponding to the key button 1 on the screen 103.

When the screen setting is selected as in FIG. 7A, a submenu 104 of the screen setting is displayed on the display unit 120 of the electronic apparatus 100 as shown in the left drawing of FIG. 7B. When the user presses a key button 2 of user input keys 41, a "clear screen" option which is placed on the position corresponding to the key button 2 is selected from the submenu 104, and the electronic apparatus 100 adjusts the screen thereafter according to the predetermined contrast level of the clear screen menu.

The invention can also be embodied as computer readable codes on a computer readable recording medium. Codes and code segments for accomplishing the present invention can be easily construed by programmers of ordinary skill in the art to which the present invention pertains. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices. The computer readable recording medium can also be distributed over network coupled computer systems so that the computer readable code is stored and executed in a distributed fashion.

According to the present invention, an electronic apparatus is provided, which is controlled effectively by a remote controller used by a user. In addition, according to the present invention, a user easily controls an electronic apparatus using a remote controller which has user input keys which are arranged in the same manner as pieces of selection information displayed in an input selection display of the electronic apparatus. Also, according to the present invention, the number of buttons of the remote controller is minimized, and thus operation convenience can be achieved and manufacturing costs can be reduced. Furthermore, in the case where an electronic apparatus has a function to control other electronic apparatuses which are connected to one another over a network, those electronic apparatuses can be controlled easily using a single remote controller.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of processing a remote control signal, the method comprising:
providing a screen (103) comprising at least one piece of selection information which can be identified in response to a user input signal;
mapping identification information of at least one user input key (41) of a plurality of user input keys (40) of a remote control (200) with the at least one piece of selection information at a position corresponding to the at least one user input key (41); and
identifying the at least one piece of selection information if the identification information of the at least one user input key (41) at a predetermined position of the remote control (200) is received.

2. The method of claim 1, wherein the mapping is performed each time the at least one piece of selection information changes due to changes in the screen (103).

3. The method of claim 1 or 2, wherein the at least one piece of selection information comprises information for at least one of a screen setting, a sound setting and a broadcast channel selection.

4. The method of claim 1, 2 or 3, further comprising:
changing a broadcast channel according to the at least one piece of selection information if the at least one piece of the selection information is broadcast channel information.

5. An electronic apparatus comprising:
a control unit (110) which configures a screen (103) comprising at least one piece of selection information that can be identified in response to a user input signal and maps identification information for identifying at least one user input key (41) of a plurality of user input keys (40) of a remote control (200) with the at least one piece of selection information at a position corresponding to the at least one user input key (41);
an identification information receiving unit (130) which receives the identification information of the at least one user input key (41) from the remote control (200); and
a display unit (120) which outputs the screen (103);
wherein if the identification information of the at least one user input key (41) is received, the control unit (110) identifies the at least one piece of selection information.

6. The electronic apparatus of claim 5, wherein the control unit (110) maps the identification information of the at least one user input key (41) with the at least one piece of selection information each time the selection information changes due to changes in the screen (103).

7. The electronic apparatus of claim 5 or 6, wherein the at least one piece of selection information comprises information for at least one of a screen setting, a sound setting and a broadcast channel selection.

8. The electronic apparatus of claim 5, 6 or 7, further comprising:
a broadcast signal processing unit (150) which processes broadcast signals broadcast through a broadcast channel,
wherein if the selection information is broadcast channel information, the control unit (110) controls the broadcast signal processing unit (150) to change a current channel to the broadcast channel according to the selection information.

9. A method of controlling an electronic apparatus using a remote control (200), the method comprising:
setting arrangement information of at least one piece of selection information which can be identified in response to a user input signal and is displayed on a screen (103) of the electronic apparatus;
determining which user input keys (41) will be operated from a plurality of user input keys (40) based on the set arrangement information of the at least one selection information; and
identifying selection information which corresponds to a position of a user input key (41) which is selected from the determined user input keys (41) to be operated.

10. The method of claim 9, wherein the at least one piece of selection information comprises information for at least one of a screen setting, a sound setting and a broadcast channel selection.

11. The method of claim 9 or 10, wherein in the determining of which user input keys (41) will be operated, the user input keys (41) which are placed at positions corresponding to the positions of pieces of selection information on the screen (103) are determined as the user input keys (41) that will be operated.

12. The method of claim 9, 10 or 11, further comprising illuminating the determined user input keys (41).

13. The method of claim 9, 10, 11 or 12, further comprising applying numbers respectively to the determined user input keys (41).

14. A remote control (200) comprising:
a user input unit (230) which comprises a plurality of user input keys (40) to receive user input signals;
a control unit (220) which determines at least one user input key (41) to be operated from the plurality of user input keys (40) based on arrangement information of at least one piece of selection information which is displayed on a screen (103) of an electronic apparatus and can be identified in response to a identification information and provides information about the determined at least one user input key (41); and
a transmitting unit (210) which transmits the identification information of the at least one user input key (41),
wherein if one of the determined at least one user input key (41) is selected, the control unit (220) controls the transmitting unit (210) to transmit identification information of the selected user input key (41) to the electronic apparatus so that selection information corresponding to a position of the selected user input key (41) can be identified from the at least one piece of selection information displayed on the screen (103) of the electronic apparatus.

15. The remote control (200) of claim 14, wherein the at least one piece of selection information comprises information for at least one of a screen setting, a sound setting and a broadcast channel selection.

16. The remote controller (200) of claim 14 or 15, wherein the at least one user input key (41) to be operated corresponds to at least one user input key (41) placed at a position corresponding to a position of the at least one piece of selection information.

17. The remote control (200) of claim 14, 15 or 16, wherein the control unit (220) controls the user input unit (230) to illuminate the determined at least one user input key (41).

18. The remote control (200) of any of claims 14 to 17, wherein the control unit (220) controls the user input unit (230) to respectively apply numbers to the determined at least one user input key (41).

19. The remote control (200) of any of claims 14 to 18, wherein the control unit (220) determines the identification information of the at least one user input key (41) based on duration of input time of the at least one user input key (41) and controls the transmitting unit (210) to transmit the identification information to the electronic apparatus.

20. A computer readable recording medium having embodied thereon a computer program for executing a method of processing remote control signals, the method comprising:
providing a screen (103) comprising at least one piece of selection information which can be identified in response to a user input signal;
mapping identification information of at least one user input key (41) of a plurality of user input keys (40) of a remote control (200) with the at least one piece of selection information at a position corresponding to the at least one user input key (41); and
identifying the at least one piece of selection information if the identification information of the at least one user input key (41) at a predetermined position of the remote control (200) is received.

21. A computer readable recording medium having embodied thereon a computer program for executing a method of controlling an electronic apparatus using a remote control (200), the method comprising:
setting arrangement information of at least one piece of selection information which can be identified in response to a user input signal and is displayed on a screen (103) of the electronic apparatus;
determining which user input keys (41) will be operated from a plurality of user input keys (40) based on the set arrangement information of the at least one selection information; and
identifying selection information which corresponds to a position of a user input key (41) which is selected from the determined user input keys (41) to be operated.
